(19) Europäisches Patentamt
European Patent Office
Office européen des brevets

(11) Veröffentlichungsnummer: **0 224 784**
**A2**

(12) # EUROPÄISCHE PATENTANMELDUNG

(21) Anmeldenummer: 86115917.6

(51) Int. Cl.⁴: C08G 77/38 , G03G 5/07

(22) Anmeldetag: 17.11.86

(30) Priorität: 21.11.85 DE 3541161
28.05.86 DE 3617996

(43) Veröffentlichungstag der Anmeldung:
10.06.87 Patentblatt 87/24

(84) Benannte Vertragsstaaten:
BE CH DE ES FR GB IT LI NL SE

(71) Anmelder: BASF Aktiengesellschaft
Carl-Bosch-Strasse 38
D-6700 Ludwigshafen(DE)

(72) Erfinder: Leyrer, Reinhold J., Dr.
Menzelstrasse 4
D-6700 Ludwigshafen(DE)
Erfinder: Hofmann, Reiner, Dr.
Mandelbergstrasse 44
D-6730 Neustadt(DE)
Erfinder: Haarer, Dietrich, Prof. Dr.
Hangweg 30
D-8580 Bayreuth(DE)
Erfinder: Strohriegl, Peter, Dr.
Bayreuther Strasse 15a
D-8581 Hummeltal(DE)
Erfinder: Neumann, Peter, Dr.
Franz-Schubert-Strasse 1
D-6908 Wiesloch(DE)
Erfinder: Iden, Rüdiger, Dr.
Ruhhecke 25a
D-6720 Speyer(DE)
Erfinder: Etzbach, Karl-Heinz, Dr.
Carl-Bosch-Ring 55
D-6710 Frankenthal(DE)

(54) **Carbazolsubstituierte Polysiloxane, daraus hergestellte feste, fotoleitfähige Schichten und diese enthaltende elektrofotographische Aufzeichnungsmaterialien.**

(57) Die Erfindung betrifft neue, photoleitende Polysiloxane, die seitenständig gebundene Carbazol-Gruppen eingebaut enthalten, wie insbesondere Polysiloxane mit wiederkehrenden Siloxan-Einheiten der allgemeinen Formel (I)

EP 0 224 784 A2

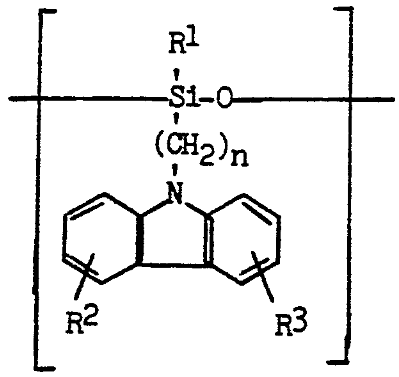

(I)

In der allgemeinen Formel (I) stehen $R^1$ für eine Alkylgruppe, insbesondere mit 1 bis 6 C-Atomen, $R^2$ und $R^3$, unabhängig voneinander, für einen Kernsubstituenten, insbesondere aber für ein Wasserstoffatom, und n für eine ganze Zahl gleich oder größer 2. Die Erfindung betrifft außerdem feste, fotoleitfähige Schichten mit einer organischen, fotoleitfähigen Verbindung und einer für diese sensibilisierend wirkenden, fotoempfindlichen Verbindung, welche als fotoleitfähige Verbindung ein derartiges seitenständiges Carbazol-Gruppen tragendes Polysiloxan und als sensibilisierend wirkende Verbindung einen organischen Farbstoff oder ein organisches Pigment, insbesondere ein Perylen-3,4:9,10-tetracarbonsäurederivat, enthält. Die Erfindung betrifft ferner elektrofotographische Aufzeichnungsmaterialien mit einem elektrisch leitenden Träger und einer darauf aufgebrachten erfindungsgemäßen festen, fotoleitfähigen Schicht.

# Carbazolsubstituierte Polysiloxane, daraus hergestellte feste, fotoleitfähige Schichten und diese enthaltende elektrofotographische Aufzeichnungsmaterialien

Die Erfindung betrifft neue, seitenständige Carbazol-Gruppen enthaltende Polysiloxane, daraus hergestellte feste, fotoleitfähige Schichten, deren Verwendung, beispielsweise in elektrophotographischen Aufzeichnungsmaterialien, sowie neue feste, fotoleitfähige Schichten mit einer fotoleitfähigen organischen Verbindung und einer fotoempfindlichen, für die fotoleitfähige Verbindung sensibilisierend wirkenden Verbindung. Die Erfindung betrifft des weiteren elektrofotographische Aufzeichnungsmaterialien mit einem elektrisch leitenden Träger sowie einer erfindungsgemäßen neuen festen, fotoleitfähigen Schicht.

Feste, fotoleitfähige Schichten mit einer fotoleitfähigen organischen Verbindung finden insbesondere bei elektrofotographischen Aufzeichnungsmaterialien, wie Kopierfilmen oder elektrofotographischen Offset-Druckplatten, Anwendung. Für ihren Aufbau sind bereits die verschiedensten Materialien vorgeschlagen worden. Vorteilhaft werden dabei in den festen, fotoleitfähigen Schichten die fotoleitfähigen organischen Verbindungen zusammen mit fotoempfindlichen Verbindungen eingesetzt, die für die fotoleitfähigen Verbindungen sensibilisierend wirken. Für die Sensibilisierung können den fotoleitfähigen Schichten beispielsweise organische spektrale Sensibilisierungsfarbstoffe zugesetzt werden, um den fotoleitfähigen Verbindungen eine spektrale Empfindlichkeit zu verleihen. Zu den sensibilisierend wirkenden fotoempfindlichen Verbindungen, die in den fotoleitfähigen Schichten enthalten sein können, gehören auch Verbindungen, insbesondere organische Farbstoffe oder organische Pigmente, die durch Absorption des in die fotoleitfähige Schicht eingestrahlten aktinischen Lichts Ladungsträger des elektrischen Stromes erzeugen und diesen unter Mithilfe eines von außen auf die fotoleitfähige Schicht aufgeprägten elektrischen Feldes auf die fotoleitfähige Verbindung übertragen können. Je nach Art der verwendeten sensibilisierend wirkenden fotoempfindlichen Verbindung und Einsatzgebiet der fotoleitfähigen Schicht bzw. des elektrofotographischen Aufzeichnungsmaterials kann dabei die Sensibilisierung der organischen fotoleitfähigen Verbindung homogen oder heterogen erfolgen. Bei homogen sensibilisierten fotoleitfähigen Schichten liegen die organische fotoleitfähige Verbindung und die sensibilisierend wirkende fotoempfindlichen Verbindungen in homogener Mischung miteinander, gegebenenfalls in einem Bindemittel, in einer einlagigen Schicht vor (vgl. z.B. DE-C-1 058 836). Bei der heterogenen Sensibilisierung ist die fotoleitfähige Schicht mehrlagig, insbesondere zweilagig, in Art einer sog. Kompositstruktur aufgebaut, wobei die erste Lage die sensibiliesierend wirkende, fotoempfindliche Verbindung enthält und eine darüber angeordnete zweite Lage von der organischen fotoleitfähigen Verbindung gebildet wird. Solche Kompositstrukturen von fotoleitfähigen Schichten sind u.a. in der DE-A-22 20 408 beschrieben.

Unter den bekannten organischen fotoleitfähigen Verbindungen kommt Poly-N-Vinylcarbazol wegen seiner guten Eigenschaften als Fotoleiter besondere Bedeutung für den Einsatz in festen, fotoleitfähigen Schichten zu. Als vorteilhaft hat es sich erwiesen, Poly-N-Vinylcarbazol zusammen mit einer Lewis-Säure, insbesondere 2,4,7-Trinitro-9-fluorenon, in Form eines Ladungen des elektrischen Stroms übertragenden Komplexes als Fotoleiter in den fotoleitfähigen Schichten einzusetzen. Auch ist schon vorgeschlagen worden, für die Sensibilisierung von fotoleitfähigen Schichten auf Basis von Poly-N-Vinylcarbazol oder anderen Carbazolgruppen enthaltenden Verbindungen organische Farbstoffe oder organische Pigmente einzusetzen, die die spektrale Empfindlichkeit der fotoleitfähigen Carbazol-Verbindungen erhöhen und/oder als Ladungsträger des elektrischen Stromes erzeugende Verbindungen fungieren. Zum Stand der Technik sei diesbezüglich beispielsweise auf die EP-A-0061088, EP-A0061089, EP-A-0061092, EP-A-0131215 sowie DE-A-32 08 337 verwiesen.

Ein großer Nachteil des Poly-N-Vinylcarbazols ist jedoch seine große Sprödigkeit. Feste, fotoleitfähige Schichten aus Poly-N-Vinylcarbazol sind hart, nicht biegsam und sehr anfällig gegenüber Rißbildung. Ferner zeigen sie nur eine schlechte Haftung gegenüber Metallen, wie sie in elektrofotographischen Aufzeichnungsmaterialien üblicherweise als elektrisch leitende Träger für die fotoleitfähigen Schichten eingesetzt werden. Zur Umgehung dieser Nachteile werden den fotoleitfähigen Schichten auf Basis von Poly-N-Vinylcarbazol vielfach Weichmacher zugegeben und werden diese Schichten in aller Regel mittels eines Primers auf die metallischen Träger aufgebracht. Beides beeinträchtigt in nicht unerheblichem Maße die fotoleitfähigen Eigenschaften dieser Schichten bzw. der hiermit hergestellten elektrofotographischen Aufzeichnungsmaterialien. Auch durch den Einsatz von niedermolekularen carbazolgruppenhaltigen Verbindungen als Fotoleiter (vgl. z.B. DE-A-32 08 337) werden keine festen, fotoleitfähigen Schichten erhalten, die den stets steigenden Anforderungen an diesen Materialien genügen.

Der vorliegenden Erfindung lag die Aufgabe zugrunde, neue photoleitende Verbindungen mit guten Photoleitereigenschaften zu entwickeln, mit denen flexible, beständige, photoleitende Schichten mit guter Haftung gegenüber metallischen Trägermaterialien hergestellt werden können, ohne daß die guten Photoleitereigenschaften dabei beeinträchtigt werden.

Der vorliegenden Erfindung lag weiterhin die Aufgabe zugrunde, neue, feste, fotoleitfähige Schichten mit einer organischen, fotoleitfähigen Verbindung zu entwickeln, die sehr gute Fotoleitereigenschaften besitzen, darüber hinaus flexibel und beständig sind und eine gute Haftung gegenüber metallischen Trägermaterialien aufweisen und sich in vorteilhafterweise für den Einsatz in elektrofotographischen Aufzeichnungsmaterialien eignen.

Es wurde nun gefunden, daß diese Aufgaben einerseits durch neue Polysiloxane, die seitenständig gebundene Carbazol-Gruppen eingebaut enthalten, andererseits durch neue, feste, fotoleitfähige Schichten, die als organische fotoleitfähige Verbindung ein seitenständige Carbazol-Gruppen tragendes Polysiloxan sowie ferner einen organischen Farbstoff oder ein organisches Pigment als fotoempfindliche sensibilisierend wirkende Verbindung enthalten, gelöst werden.

Gegenstand der vorliegenden Erfindung sind dementsprechend Polysiloxane mit seitenständig zur Polymerhauptkette gebundenen Carbazol-Gruppen.

Gegenstand der Erfindung sind ferner feste, fotoleitfähige Schichten, hergestellt mit diesen seitenständige Carbazol-Gruppen tragender Polysiloxanen.

Gegenstand der Erfindung ist außerdem eine feste, fotoleitfähige Schicht mit einer organischen fotoleitfähigen Verbindung und einer für diese sensibilisierend wirkenden fotoempfindlichen Verbindung, welche dadurch gekennzeichnet ist, daß sie als fotoleitfähige Verbindung ein Polysiloxan mit seitenständig an die Polysiloxan-Hauptkette gebundenen Carbazol-Gruppen und als sensibilisierend wirkende Verbindung einen organischen Farbstoff oder ein organisches Pigment enthält.

Gegenstand der Erfindung ist darüber hinaus ein elektrofotographisches Aufzeichnungsmaterial mit einem elektrisch leitenden Träger und einer auf diesem aufgebrachten erfindungsgemäßen festen fotoleitfähigen Schicht der vorstehend genannten Art.

Weitere, spezielle Ausgestaltungsformen der Erfindung ergeben sich aus der nachfolgenden, detaillierten Beschreibung.

Die neuen erfindungsgemäßen Carbazol-Gruppen tragenden Polysiloxane sowie die damit hergestellten neuen festen, fotoleitfähigen Schichten zeichnen sich durch eine Kombination sehr guter und vorteilhafter Eigenschaften aus. So besitzen sie nicht nur eine hervorragende Photoleitfähigkeit, die mit der von Poly-N-vinylcarbazol vergleichbar ist, sondern lassen sich auch zu nicht-spröden, flexiblen Schichten mit guter Haftung auf Substraten mit metallischen Oberflächen verarbeiten. Sie eignen sich daher mit Vorteil für die Herstellung von photoleitfähigen Schichten und elektrophotographischen Aufzeichnungsmaterialien, wie sie z.B. in der Kopiertechnik und bei der Herstellung elektrophotographischer Druckformen Anwendung finden. Kopierfolien, d.h. elektrofotographische Folien für den Kopiersektor, mit den erfindungsgemäßen neuen festen fotoleitfähigen Schichten zeichnen sich auch durch eine hohe Cyclen-Stabilität aus, d.h. sie zeigen auch bei wiederholter Verwendung (mehrfache Auf-und Entladung) keine Ermüdungserscheinungen.

Die erfindungsgemäßen Polysiloxane besitzen eine Polysiloxan-Hauptkette, d.h. eine aus wiederkehrenden Siloxan-Einheiten

$$-\left[ \overset{|}{\underset{|}{Si}}-O \right]-$$

aufgebaute Polymer-Kette, an die seitenständig über die Si-Atome Carbazol-Gruppen gebunden sind. Die Carbazol-Gruppen können substituiert sein, bevorzugt enthalten die Polysiloxane jedoch unsubstituierte Carbazol-Gruppen eingebaut. Auch wenn der Carbazol-Rest in grundsätzlich beliebiger Stellung mit der Polysiloxan-Hauptkette verbunden sein kann, sind die Polysiloxane besonders bevorzugt, in denen die Carbazol-Gruppen über das N-Atom mit der Polysiloxan-Hauptkette, beispielsweise über Alkylen-Zwischengruppen, verbunden sind.

Das Molekulargewicht der erfindungsgemäßen, Carbazol-Gruppen tragenden Polysiloxane und damit auch das Molekulargewicht der ihnen zu Grunde liegenden Polysiloxan-Hauptkette sollte, auch wenn es grundsätzlich in einem breiten Bereich variieren kann, vorteilhafterweise möglichst hoch gewählt werden. Als geeignet haben sich unter anderem Polysiloxane mit einem mittleren Polymerisationsgrad -(Zahlenmittel) im Bereich von etwa 40 bis etwa 100 und darüber erwiesen, d.h. Polysiloxane, deren Hauptkette im Zahlenmittel aus etwa 40 bis etwa 100 oder mehr Siloxan-Einheiten

$$\left[ -\overset{|}{\underset{|}{Si}}-O- \right]$$

besteht.

In den erfindungsgemäßen, Carbazol-Gruppen tragenden Polysiloxanen, wie sie für die Herstellung der festen fotoleitfähigen Schichten als Fotoleiter dienen, können praktisch alle oder auch nur ein Teil der Si-Atome der Polysiloxan-Hauptkette mit seitenständigen, Carbazol-Gruppen enthaltenden Resten verknüpft sein. Als vorteilhaft haben sich solche Polysiloxane erwiesen, in denen mindestens 40 %, vorzugsweise 80-100 %, der wiederkehrenden Siloxan-Einheiten seitenständig gebundene Carbazol-Gruppen tragen. In den Fällen, in denen -abgesehen von den Endgruppen -nicht alle Si-Atome der Polysiloxan-Hauptkette mit einer seitenständigen Carbazol-Gruppe verbunden sind, enthalten die restlichen, keine Carbazol-Gruppen tragenden Si-Atome der Polysiloxan-Hauptkette im allgemeinen und vorzugsweise einen reaktiven Rest, der weiteren Umsetzungen, wie z.B. Vernetzungsreaktionen, zugänglich ist.

Die erfindungsgemäßen, Carbazol-Gruppen tragenden Polysiloxane, wie sie für die Herstellung der erfindungsgemäßen festen, fotoleitfähigen Schichten dienen, können, je nach Aufbau, bei Raumtemperatur fest oder auch hochviskos bis viskos sein. Bei hohen Polymerisationsgraden der den erfindungsgemäßen Polysiloxanen zu Grunde liegenden Polysiloxan-Hauptkette sind die Produkte üblicherweise bei Raumtemperatur fest oder zumindest hochviskos, wobei mit abnehmendem Polymerisationsgrad in aller Regel auch ihre Viskosität abnimmt. Gleichermaßen ist der Zustand, in dem die erfindungsgemäßen Polysiloxane bei Raumtemperatur vorliegen, abhängig von der Zwischengruppe (Spacer), über die die Carbazol-Gruppen an die Polysiloxan-Hauptkette gebunden sind; je länger die Alkylen-Zwischengruppe ist, desto niedriger liegt, bei sonst gleichem Aufbau, die Glasübergangstemperatur der erfindungsgemäßen Carbazol-Gruppen tragenden Polysiloxane und umgekehrt. Bei Raumtemperatur feste erfindungsgemäße Polysiloxanen haben daher in aller Regel kurze Alkylen-Zwischengruppen zur Verknüpfung der Carbazol-Seitengruppen mit der Polysiloxan-Hauptkette.

Aus den bei Raumtemperatur festen erfindungsgemäßen Polysiloxanen lassen sich in vorteilhafter Weise unmittelbar feste, flexible, nicht-spröde, photoleitfähige Schichten herstellen. In diesen festen Polysiloxanen können dabei alle Si-Atome der Polysiloxan-Hauptkette mit seitenständigen, Carbazol-Gruppen enthaltenden Resten verknüpft sein; ein Teil der Si-Atome der Polysiloxan-Hauptkette können hierin jedoch auch anstelle der Carbazol-Gruppen enthaltenden Reste mit anderen Resten, im allgemeinen und vorzugsweise mit reaktiven, der weiteren Umsetzung, insbesondere Vernetzungsreaktionen, zugänglichen Resten verbunden sein. Die aus den bei Raumtemperatur festen, Carbazol-Gruppen tragenden Polysiloxanen hergestellten fotoleitfähigen Schichten besitzen eine sehr gute Haftung auf Metalloberflächen, die durch einen geringen Anteil an Si-H-Bindungen in den Polysiloxanen noch verbessert werden kann.

Zur Herstellung von festen, flexiblen, nicht-spröden, fotoleitfähigen Schichten aus bei Raumtemperatur viskosen oder hochviskosen Carbazol-Gruppen tragenden Polysiloxanen können beispielsweise feste, polymere Bindemittel mitverwendet werden, in die die viskosen oder hochviskosen Carbazol-Gruppen tragenden Polysiloxane eingebettet werden. Vorteilhaft und vorzugsweise geht man jedoch zur Herstellung von festen, flexiblen, nicht-spröden, fotoleitfähigen Schichten aus bei Raumtemperatur viskosen oder hochviskosen Carbazol-Gruppen tragenden Polysiloxanen von solchen Polysiloxanen aus, die neben den wiederkehrenden Siloxan-Einheiten mit den seitenständig gebundenen Carbazol-Gruppen enthaltenden Resten auch noch einen geringen Anteil an wiederkehrenden Siloxan-Einheiten mit reaktiven, einer weiteren Umsetzung zugänglichen Resten enthalten. Bei diesen reaktiven Resten kann es sich beispielsweise um an Si-Atome der Polysiloxan-Hauptkette gebundene Wasserstoffatome, um Epoxid-Gruppen, Isocyanat-Gruppen, polymerisierbare olefinische Doppelbindungen und dergleichen enthaltende Reste handeln. Zur Herstellung von festen, fotoleitfähigen Schichten werden diese viskosen oder hochviskosen, neben den seitenständigen Carbazol-Gruppen noch zusätzliche reaktive Reste enthaltenden Polysiloxane, gegebenenfalls mit weiteren Bestandteilen der fotoleitfähigen Schicht zu einer Schicht geformt und dann die reaktiven

Reste der Polysiloxane in geeigneter Weise unter Vernetzung und Härtung der Schicht ganz oder teilweise umgesetzt. In den bei Raumtemperatur viskosen oder hochviskosen, Carbazol-Gruppen tragenden Polysiloxanen, die für die Herstellung von festen, vernetzten fotoleitfähigen Schichten herangezogen werden, ist daher die Zahl der reaktiven Reste mindestens so groß, daß hierüber eine hinreichende Vernetzung und Verfestigung der aus diesen Polysiloxanen gebildeten Schicht erzielt werden kann. Im allgemeinen enthalten hierzu in den viskosen oder hochviskosen, Carbazol-Gruppen tragenden Polysiloxanen mindestens 0,5 %, vorzugsweise mindestens 1 %, der wiederkehrenden Siloxan-Einheiten solche reaktiven, einer Vernetzungsreaktion zugänglichen Reste. Die Obergrenze dieser reaktiven Reste in den viskosen oder hochviskosen Polysiloxanen wird durch die Anzahl der seitenständigen Carbazol-Gruppen bestimmt, die hinreichend hoch sein soll, um eine angemessene Fotoleitfähigkeit der Schicht zu bewirken. Zur Herstellung von festen, vernetzten, fotoleitfähigen Schichten aus den viskosen oder hochviskosen, Carbazol-Gruppen tragenden Polysiloxanen enthalten daher vorzugsweise nicht mehr als etwa 20 % der wiederkehrenden Siloxan-Einheiten in den viskosen oder hochviskosen, Carbazol-Gruppen tragenden Polysiloxanen derartige reaktive Reste. Zur Vernetzung dieser viskosen oder hochviskosen, Carbazol-Gruppen tragenden Polysiloxane, die sich zur Herstellung der erfindungsgemäßen festen, flexiblen, fotoleitfähigen Schichten eignen, können die reaktiven Reste der Polysiloxane entweder unmittelbar, wie z.B. bei polymerisierbaren Doppelbindungen, oder aber auch über Vernetzungsmittel miteinander umgesetzt werden. Als Vernetzungsmittel kommen übliche Vernetzungsmittel, wie z.B. Verbindungen mit 2 oder mehr olefinischen Doppelbindungen, Diole oder Polyole, Diamine oder Polyamine, Dicarbonsäuren oder Polycarbonsäuren, cyclische Anhydride von Di-oder Polycarbonsäuren und dergleichen in Betracht, wobei sich die Art des Vernetzungsmittels in bekannter Weise nach der Art des reaktiven Restes richtet.

Zu den erfindungsgemäßen, Carbazol-Gruppen tragenden Polysiloxanen, die als fotoleitfähige Verbindung zur Herstellung der erfindungsgemäßen festen fotoleitfähigen Schichten dienen sollen, gehören insbesondere solche, die wiederkehrende Siloxan-Einheiten der allgemeinen Formel (I)

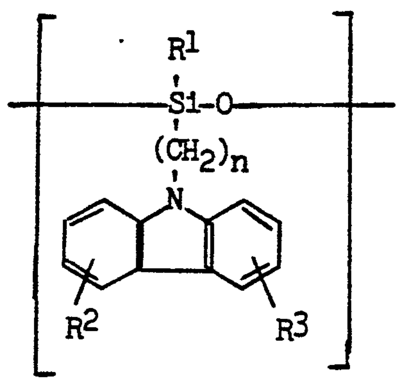

(I)

eingebaut enthalten, worin

$R^1$ eine Alkylgruppe, insbesondere mit 1 bis 6 C-Atomen,

$R^2$,$R^3$ unabhängig voneinander, ein Wasserstoffatom, eine Alkylgruppe, eine Alkoxygruppe, eine Aminogruppe, eine Hydroxygruppe oder ein Halogenatom und

n eine ganze Zahl gleich oder größer 2

bedeuten. In den wiederkehrenden Siloxan-Einheiten der allgemeinen Formel (I) steht der Rest $R^1$ vorzugsweise für Methyl oder Ethyl, insbesondere für Methyl. Vorzugsweise ist der Carbazol-Rest in den wiederkehrenden Siloxan-Einheiten der allgemeinen Formel (I) unsubstituiert, d.h. die Reste $R^2$ und $R^3$ stellen insbesondere jeweils ein Wasserstoffatom dar. n ist vorzugsweise eine ganze Zahl im Bereich von 2 bis 22, wobei sich beispielsweise Werte für n im Bereich von 3 bis 11 als sehr günstig erwiesen haben.

Die Carbazol-Gruppen tragenden erfindungsgemäßen Polysiloxane können dabei praktisch vollständig aus wiederkehrenden Siloxan-Einheiten der allgemeinen Formel (I) aufgebaut sein, sie können aber, abgesehen von den Endgruppen, auch noch andere wiederkehrende Siloxan-Einheiten, insbesondere solche der allgemeinen Formel (II)

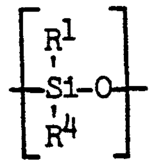 (II)

in der Polysiloxan-Kette eingebaut enthalten. Als Fotoleiter für die Herstellung der erfindungsgemäßen festen, fotoleitfähigen Schichten haben sich dabei die seitenständig Carbazol-Gruppen tragenden Polysiloxane als besonders interessant und vorteilhaft erwiesen, die praktisch vollständig aus wiederkehrenden Siloxan-Einheiten der allgemeinen Formel (I) aufgebaut sind, oder solche, die -abgesehen von den Endgruppen -neben den wiederkehrenden Siloxan-Einheiten der allgemeinen Formel (I) auch noch einen untergeordneten Anteil an anderen wiederkehrenden Siloxan-Einheiten, insbesondere solchen der allgemeinen Formel (II) in der Polysiloxan-Ketten eingebaut enthalten. In den wiederkehrenden Siloxan-Einheiten der allgemeinen Formel (II) hat der Substituent $R^1$ die gleiche Bedeutung wie in der vorstehend angeführten allgemeinen Formel (I), d.h. er stellt eine Alkylgruppe, insbesondere mit 1 bis 6 C-Atomen, wie z.B. Methyl oder Ethyl, dar und ist vorzugsweise Methyl. $R^4$ steht in den wiederkehrenden Siloxan-Einheiten der allgemeinen Formel (II) für einen reaktiven, vernetzbaren Rest, wie z.B. einen eine Vinyl-, (Meth)acrylat-, Isocyanat-oder Epoxy-Gruppe enthaltenden Rest sowie insbesondere ein Wasserstoffatom.

Bevorzugte erfindungsgemäße Carbazol-Gruppen tragende Polysiloxane sind, neben den Endgruppen, aus wiederkehrenden Siloxan-Einheiten der allgemeinen Formel (I) sowie gegebenenfalls wiederkehrenden Siloxan-Einheiten der allgemeinen Formel (II) aufgebaut. In diesen bevorzugten Carbazol-Gruppen tragenden Polysiloxanen können die wiederkehrenden Siloxan-Einheiten der allgemeinen Formeln (I) und (II) im molaren Verhältnis von etwa 0,4 bis 1: 0,6 bis 0 zueinander eingebaut sein, wobei das molare Verhältnis der wiederkehrenden Siloxan-Einheiten der allgemeinen Formel (I) zu den wiederkehrenden Siloxan-Einheiten der allgemeinen Formel (II) vorzugsweise im Bereich von 0,8 bis 1 : 0,2 bis 0 liegt. Das molare Verhältnis gibt dabei die Anzahl der wiederkehrenden Siloxan-Einheiten der allgemeinen Formeln (I) und (II), bezogen auf die Summe der wiederkehrenden Siloxan-Einheiten der allgemeinen Formeln (I) + (II), in den erfindungsgemäßen Polysiloxanen wieder. Zu diesen bevorzugten erfindungsgemäßen Polysiloxanen gehören die bei Raumtemperatur festen Polysiloxane, die neben den Endgruppen praktisch ausschließlich aus wiederkehrenden Einheiten der allgemeinen Formel (I) aufgebaut sind, wobei in der allgemeinen Formel (I) n insbesondere einen Wert nicht über 5 hat und beispielsweise etwa 3, 4 oder 5 darstellt. Des weiteren gehören zu den bevorzugten erfindungsgemäßen Polysiloxanen solche bei Raumtemperatur festen Polysiloxane, die neben den Endgruppen aus 80 bis 99,5 Mol.-% wiederkehrender Einheiten der allgemeinen Formel (I) und 0,5 bis 20 Mol.-% wiederkehrender Einheiten der allgemeinen Formel (II) bestehen, wobei in der allgemeinen Formel (I) n insbesondere einen Wert nicht über 5 hat und in der allgemeinen Formel (II) $R^4$ insbesondere ein Waserstoffatom darstellt. Günstig sind auch bei Raumtemperatur hochviskose oder viskose erfindungsgemäße Polysiloxane, die neben den Endgruppen aus etwa 80 bis 99 Mol.-% wiederkehrender Einheiten der allgemeinen Formel (I) und etwa 1 bis 20 Mol.-% wiederkehrender Einheiten der allgemeinen Formel (II) aufgebaut sind.

Die erfindungsgemäßen, seitenständige Carbazol-Gruppen tragenden Polysiloxane können nach bekannten Methoden der organischen Chemie hergestellt werden. Beispielsweise werden sie -wie nachfolgend dargestellt -durch Umsetzung von Poly-(hydrogensiloxanen) mit N-Alkenylcarbazolen unter Reaktionsbedingungen erhalten, wie sie z.B. bei H. Finkelmann und G. Rehage, Makrom. Chem., Rapid Commun. 1, 31 - (1980), C. Aguilera, H. Ringsdorf, A. Schneller und R. Zentel, Prepr. of the IUPAC Int. Symposium on Macromolecules, Florence 1980, 306 oder H. Ringsdorf und A. Schneller, Makrom. Chem., Rapid Comm. 3, 557 (1982) beschrieben sind.

Die N-Alkenylcarbazole lassen sich aus Carbazol und Alkylhalogeniden entsprechend den Synthesevorschriften von J. Heller, D.J. Lyman und W.A. Hewett, Makrom. Chem. 73, 48 (1964) herstellen. Diese Herstellweise ist im nachstehenden Reaktionsschema für den Fall des Poly-(methyl-hydrogensiloxans) illustriert.

Reaktionsschema

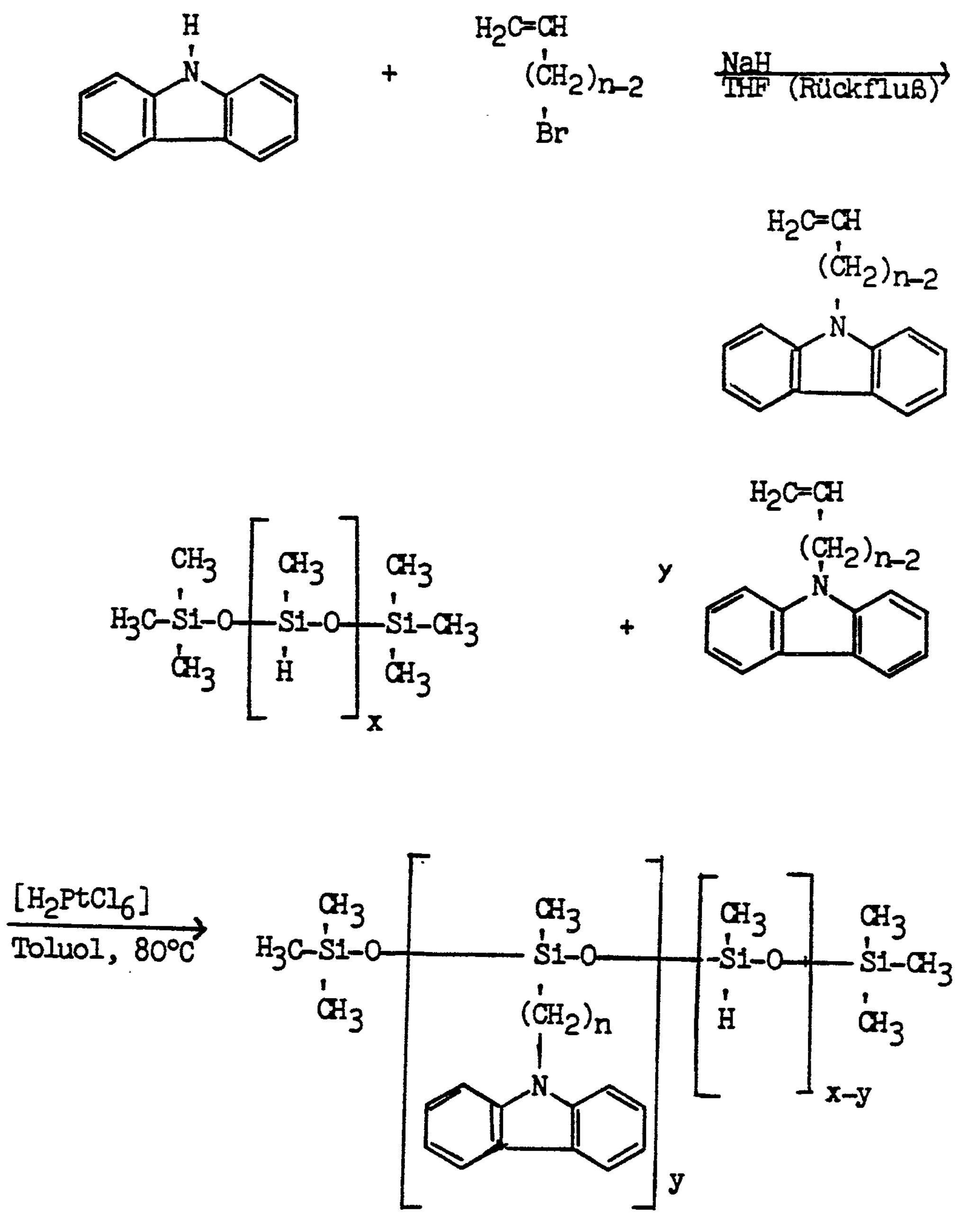


In dem Reaktionsschema hat n die gleiche Bedeutung wie in der weiter oben angeführten allgemeinen Formel (I). x bedeutet die Anzahl der wiederkehrenden Siloxan-Einheiten in dem Polysiloxan und y steht für die Anzahl der Carbazol-Gruppen tragenden Siloxan-Einheiten nach der Umsetzung des Ausgangs-Polysiloxans mit dem Alkenylcarbazol. y kann dabei kleiner oder gleich x sein. Ist $y = x$, so sind alle wiederkehrenden Siloxaneinheiten des Ausgangs-Polysiloxans durch die Carbazol-Gruppen substituiert. Für den Fall, daß $y < x$ ist, ist bei der Umsetzung des Ausgangs-Polysiloxans mit dem Alkenylcarbazol nur ein Teil der Si-H-Bindungen der wiederkehrenden Siloxan-Einheiten des Ausgangs-Polysiloxans umgesetzt worden. In diesem Fall kann das erhaltene Carbazol-Gruppen tragende Polysiloxan anschließend noch weiter dadurch modifiziert werden, daß die noch vorhandenen Si-H-Bindungen in dem Polysiloxan beispielsweise zur Einführung anderer reaktiver, vernetzbarer Gruppen, wie sie vorstehend z.B. für den Rest R[4] in der allgemeinen Formel (II) genannt sind, ganz oder teilweise mit geeigneten, derartige Gruppen enthaltenden Verbindungen umgesetzt werden. Die Herstellung der erfindungsgemäßen, Carbazol-Gruppen tragenden Polysiloxane wird des weiteren durch die nachfolgenden Beispiele näher erläutert.

Bei den erfindungsgemäßen, die seitenständigen Carbazol-Gruppen eingebaut enthaltenden Polysiloxanen handelt es sich um Photoleiter mit sehr guten Photoleitereigenschaften. Sie können daher überall dort eingesetzt werden, wo bisher Poly-N-vinylcarbazol als Photoleiter verwendet worden ist. Ebenso wie im Falle von Poly-N-vinylcarbazol ist es vorteilhaft, wenn die erfindungsgemäßen, seitenständigen Carbazol-Gruppen tragenden Polysiloxane für den Einsatz als Photoleiter, wie z.B. in photoleitfähigen Schichten, zusammen mit Dotierungs-oder Sensibilisierungsmitteln eingesetzt werden. Hierfür kommen die für Poly-N-vinylcarbazol üblichen und an sich bekannten Dotierungs-oder Sensibilisierungsmittel in Betracht, wie z.B. Elektronenakzeptor-Materialien, die mit den Carbazol-Gruppen einen Ladungsübertragungskomplex zu bilden vermögen. Stellvertretend und beispielhaft hierfür seien Lewis-Säuren, wie 2,4,7-Trinitrofluorenon, 2,4,5,7-Tetranitrofluorenon, Chloranil oder Tetracyanochinondimethan, genannt.

Insbesondere eignen sich die erfindungsgemäßen, Carbazol-Gruppen tragenden Polysiloxane zur Herstellung von festen, flexiblen, nicht-spröden, photoleitfähigen Schichten.

Zur Herstellung der erfindungsgemäßen festen, fotoleitfähigen Schichten können bei Raumtemperatur feste, seitenständige Carbazol-Gruppen tragende Polysiloxane nach den an sich bekannten Methoden, z.B. durch Gießen aus Lösung und Abdampfen des Lösungsmittels, unmittelbar zu den festen Fotoleiter-Schichten geformt werden. Viskose oder hochviskose, seitenständige Carbazol-Gruppen tragende Polysiloxane werden zur Herstellung der festen, fotoleitfähigen Schichten, gegebenenfalls zusammen mit einem Vernetzungsmittel und/oder Vernetzungsinitiator, in der gewünschten Schichtdicke auf ein Substrat aufgebracht und dann über die in den viskosen oder hochviskosen, die seitenständigen Carbazol-Gruppen tragenden Polysiloxanen enthaltenden reaktiven Reste vernetzt. Handelt es sich bei den reaktiven Resten z.B. um Si-H-Gruppen, kommen für die Vernetzung der Schichten vorzugsweise Diene oder Polyene, wie z.B.

$$H_2C{=}CH{-}(CH_2)_u{-}CH{=}CH_2$$

oder

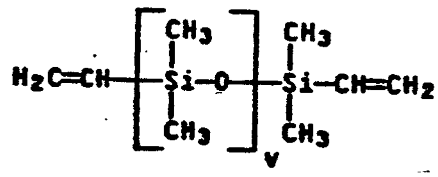

mit u = 0 oder einer ganzen Zahl und v gleich einer ganzen Zahl, in Betracht, die mit den Si-H-Bindungen in an sich bekannter Weise umgesetzt werden. Handelt es sich bei den reaktiven Gruppen in den viskosen oder hochviskosen, die seitenständigen Carbazol-Gruppen tragenden Polysiloxanen beispielsweise um polymerisierbare olefinische Doppelbindungen enthaltende Reste, wie z.B. Vinyl-Gruppen oder (Meth)-acryloyl-Gruppen enthaltende Reste, kann die Vernetzung der Fotoleiter-Schichten zu deren Verfestigung ohne Zusatz weiterer Vernetzungsmittel durchgeführt werden. Vorteilhaft verwendet man in diesem Fall einen Vernetzungsinitiator, wie z.B. einen thermischen Polymerisationsinitiator oder einen Fotopolymerisationsinitiator, wobei im letztgenannten Fall dann die Vernetzung der Fotoleiterschicht auch in einem vorgegebenen Muster bildweise erfolgen kann.

Aufgrund der guten Haftung der erfindungsgemäßen Polysiloxane gegenüber metallischen Oberflächen eignen sie sich hervorragend für den Einsatz in Photoleiter-Schichten in Kopierfolien oder elektrophotographischen Druckplatten, insbesondere elektrophotographischen Offsetdruckplatten.

Die mit den seitenständige Carbazol-Gruppen tragenden POlysiloxanen als fotoleitende Verbindungen, d.h. unter dem Einfluß von aktinischem Licht Ladungen des elektrischen Stromes transportierende Verbindungen, hergestellten erfindungsgemäßen festen, fotoleitfähigen Schichten enthalten darüber hinaus als sensibilisierend wirkende Verbindungen zur Steigerung der Fotoempfindlichkeit und Fotoleitfähigkeit der Schichten fotoempfindliche organische Farbstoffe oder Pigmente. Als sensibilisierend wirkende, fotoempfindliche Verbindungen für die erfindungsgemäßen festen, fotoleitfähigen Schichten kommen dabei prinzipiell alle organischen Farbstoffe oder organischen Pigmente in Betracht, die für die Sensibilisierung von fotoleitfähigen Schichten aus Poly-N-vinylcarbazol oder niedermolekularen Carbazol-Verbindungen an sich

bekannt und üblich sind. Hierzu gehören sowohl spektrale Sensibilisierungsfarbstoffe, d.h. organische Farbstoffe, die die spektrale Empfindlichkeit der fotoleitfähigen Schicht verbessern, als auch Farbstoffe und Pigmente, die unter dem Einfluß von aktinischem Licht Ladungsträger des elektrischen Stromes zu erzeugen vermögen. Für einlagige, homogen sensibilisierte fotoleitfähige Schichten, d.h. fotoleitfähige Schichten, die die fotoleitfähige Verbindung und die sensibilisierend wirkende Verbindung in einer einzigen homogenen Schicht enthalten, kommen in üblicher und an sich bekannter Weise insbesondere die löslichen organischen Farbstoffe als sensibilisierend wirkende Verbindungen in Betracht. Organische Pigmente werden hingegen vorzugsweise für die mehrlagigen, heterogen sensibilisierten fotoleitfähigen Schichten, d.h. fotoleitfähigen Schichten, die die sensibilisierend wirkende Verbindung und die fotoleitfähige Verbindung in separaten, diskreten übereinanderliegenden Lagen enthalten, verwendet. Die organischen Farbstoffe oder organischen Pigmente werden in den erfindungsgemäßen festen, fotoleitfähigen Schichten dabei in den für die sensibilisierend wirkenden Verbindungen an sich bekannten und üblichen Mengen eingesetzt. Beispielsweise enthalten die einlagigen, homogen sensibilisierten, fotoleitfähigen Schichten die sensibilisierend wirkenden Verbindungen im allgemeinen in einer Menge von etwa 0,5 bis 10 Gew.-%, bezogen auf die in der fotoleitfähigen Schicht enthaltene fotoleitfähige Verbindung.

Zu den organischen Farbstoffen, die insbesondere für die erfindungsgemäßen einlagigen, homogen sensibilisierten fotoleitfähigen Schichten als sensibilisierend wirkende Verbindungen in Betracht kommen, gehören beispielsweise Triarylmethan-Farbstoffe, Xanthen-Farbstoffe, Cyanin-Farbstoffe, Thiazin-Farbstoffe und andere. Als Vertreter hierfür seien genannt Rhodamin B, Rhodamin 6G, Malachit-Grün, Methyl-Violett, Kristall-Violett, Bengal-Rose, Thiocyanin und Methylen-Blau. Zu den als sensibilisierend wirkende Verbindung geeigneten Farbstoffen oder Pigmenten für die mehrlagig aufgebauten, heterogen sensibilisierten erfindungsgemäßen fotoleitfähigen Schichten gehören u.a. Azofarbstoffe, Phthalocyanine und Isoindolinfarbstoffe. Als besonders günstig und vorteilhaft für die Sensibilisierung sowohl der einlagigen, homogen sensibilisierten als auch der mehrlagigen, heterogen sensibilisierten erfindungsgemäßen festen, fotoleitfähigen Schichten haben sich Farbstoffe oder Pigmente aus der Reihe der Perylen-3,4:9,10-tetracarbonsäurederivate erwiesen. Neben Perylentetracarbonsäureanhydrid, den Perylentetracarbonsäureestern und Perylentetracarbonsäureamiden gehören die löslichen und unlöslichen Perylen-3,4:9,10-tetracarbonsäurediimidderivate. Neben N,N'-bis(2',6'-di-chlorphenyl)-perylen-3,4:9,10-tetracarbonsäurediimid eignen sich als sensibilisierend wirkende Verbindung für die erfindungsgemäßen festen, fotoleitfähigen Schichten beispielsweise und insbesondere die Perylen-3,4:9,10-tetracarbonsäurediimidderivate der nachstehend angeführten allgemeinen Formeln (III), (IV) und (V).

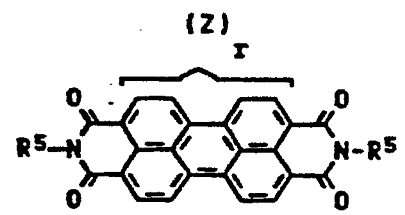

(III)

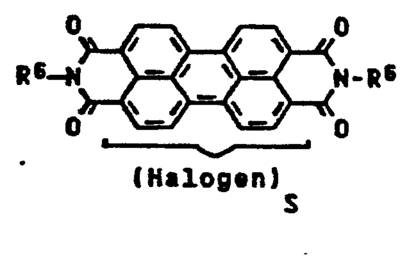

(IV)

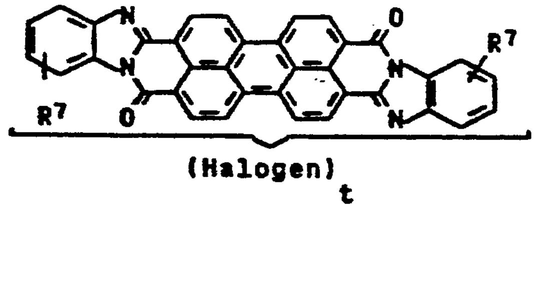

(V)

In den allgemeinen Formeln (III) -(V) bedeuten:
$R^5$ ein Wasserstoffatom oder eine Alkylgruppe mit 1 bis 6 C-Atomen, insbesondere mit 2 oder 3 C-Atomen, die durch einen Hydroxy-, Alkoxy-, Phenyl-oder Cycloalkyl-Rest substituiert sein kann,
Z einen p-Phenylazoanilino-, Phenylthio-oder Anilino-Rest
$R^6$ ein Wasserstoffatom, ein Alkyl-, Aryl-, Aralkyl-oder Alkaryl-Rest,
$R^7$ einen Wasserstoffatom, einen Alkylrest oder auch für ein kondensiertes aromatisches Ringsystem,
r eine Zahl von 0 bis 6 und
s, t den Halogensubstitutionsgrad, bezogen auf das aromatische Grundgerüst der allgemeinen Formeln (IV) bzw. (V), insbesondere im Bereich von 45 bis 75 % des maximal möglichen Halogensubstitutionsgrades.

In der Verbindung der allgemeinen Formel (III) ist $R^5$ vorzugsweise ein Wasserstoffatom in dem Fall, in dem r ungleich c ist und dann insbesondere eine Zahl im Bereich von 2 bis 4 bedeutet. Als sehr vorteilhaft haben sich Diperylentetracarbonsäurederivate der allgemeinen Formel (III) erwiesen, in denen r = 0 ist und $R^5$ einen gegebenenfalls substituierten Alkylrest mit 2 oder 3 C-Atomen darstellt, wie insbesondere Propyl, 1-Hydroxypropyl, 1-Methoxypropyl, 1-Phenylethyl oder 1-Cyclohexyethyl. Ebenfalls als besonders vorteilhaft für die Sensibilisierung der erfindungsgemäßen festen, fotoleitfähigen Schichten haben sich die Verbindungen der allgemeinen Formel (V) erwiesen, in denen $R^7$ für ein Wasserstoffatom oder eine niedere Alkylgruppe, beispielsweise Butylgruppe, steht und das aromatische Grundgerüst durch Chlor substituiert ist, wobei der Chlorierungsgrad, bezogen auf das aromatische Grundgerüst der allgemeinen Formel (V) 20 bis 50 % des maximal möglichen beträgt.

Neben den fotoleitenden Verbindungen und den sensibilisierend wirkenden Verbindungen der vorstehend beschriebenen Art können die erfindungsgemäßen festen, fotoleitfähigen Schichten zusätzlich noch weitere Bestandteile der für fotoleitfähige Schichten üblichen Art, wie beispielsweise Bindemittel, Netzmittel, Verlaufshilfsmittel, Weichmacher oder Elektronenakzeptor-Materialien, die mit den Carbazol-Gruppen einen Ladungsübertragungskomplex zu bilden vermögen, wie beispielsweise 2,4,7-Trinitrofluorenon, enthalten. Ein besonderer Vorteil der erfindungsgemäßen festen, fotoleitfähigen Schichten liegt darin, daß aufgrund der als fotoleitende Verbindung für ihre Herstellung eingesetzten, seitenständige Carbazol-Gruppen tragenden Polysiloxane auf die Mitverwendung von zusätzlichen Bindemitteln oder Weichmachern in der fotoleitfähigen Schicht - auch wenn diese grundsätzlich möglich ist -verzichtet werden kann und man dennoch zu festen, nicht-spröden, flexiblen Schichten mit hoher Fotoleitfähigkeit gelangt.

Zur Herstellung von einlagigen, homogen sensibilisierten erfindungsgemäßen festen, fotoleitfähigen Schichten werden die erfindungsgemäß als fotoleitende Verbindung dienende seitenständige Carbazol-Gruppen tragenden Polysiloxane homogen mit den als sensibilisierend wirkende Verbindung dienenden organischen Farbstoffen, sowie evtl. weiter mitverwendeten Zusätzen, vermischt und diese homogenen Mischungen zu einer Schicht der gewünschten Schichtstärke geformt. Vorteilhafterweise arbeitet man zum Mischen der Komponenten in Lösung in einem organischen Lösungsmittel und werden die Komponenten zur Schichtbildung aus dieser Lösung auf einen Träger so aufgebracht, daß nach dem Ablüften des Lösungsmittels eine Trockenschichtdicke von ca. c,8 bis etwa 40 µm (je nach Verwendungszweck, bei elektrofotographischen Druckformen insbesondere c,8 bis 6 µm und bei Kopierfilmen etwa 5 bis 25 µm) resultiert. Werden zur Herstellung der einlagigen, homogen sensibilisierten erfindungsgemäßen fotoleitfähigen Schichten viskose oder hochviskose Polysiloxane der in Rede stehenden Art ohne Mitverwendung eines weiteren Bindemittels herangezogen, wird die gebildete fotoleitfähige Schicht nach ihrem Ausformen auf den Träger durch Vernetzen und Härten der reaktiven Reste in den Polysiloxanen, wie vorstehend beschrieben, verfestigt.

Mehrlagige, heterogen sensibiliserte erfindungsgemäße feste, fotoleitfähige Schichten werden in an sich bekannter Weise hergestellt, indem auf einen Träger zunächst die erste Lage von den sensibilisierend wirkenden organischen Farbstoffen oder organischen Pigmenten hergestellt wird. Diese erste Lage kann beispielsweise durch Aufdampfen der sensibilisierend wirkenden Verbindung auf den Träger hergestellt werden; vorteilhafterweise werden jedoch für diese erste Lage die sensibilisierend wirkenden organischen Farbstoffe oder organischen Pigmente in Form einer Lösung in einem organischen, vorzugsweise leich verdampfbaren Lösungsmittel allein oder gegebenenfalls zusammen mit einem hierfür üblichen Bindemittel, das gewünschtenfalls Sperrschichteigenschaften aufweisen kann, auf den Träger aufgetragen. Nach dem Abdampfen des Lösungsmittels beträgt die Trockenschichtdicke dieser ersten Lage von den sensibilisierend wirkenden organischen Farbstoffen oder organischen Pigmenten im allgemeinen 0,005 bis 5 µm, insbesondere 0,1 bis 1,5 µm. Auf diese erste Lage wird anschließend die zweite Lage aus den die seitenständigen Carbazol-Gruppen tragenden Polysiloxanen, gegebenenfalls zusammen mit weiteren, mitverwendeten Zusatzstoffen, aufgebracht. Diese zweite Lage aus den erfindungsgemäß einzusetzenden Polysiloxanen wird vorteilhafterweise ebenfalls durch Gießen aus einer Lösung erzeugt. Ihre Trockenschichtdicke liegt im allgemeinen im Bereich von 1 bis etwa 40 µm, vorzugsweise zwischen 5 und 25 µm

und insbesondere im Bereich zwischen 7 und 15 µm. Vorzugsweise wird bei den mehrlagigen, heterogen sensibilisierten erfindungsgemäßen fotoleitfähigen Schichten die zweite Lage allein aus den erfindungsgemäß als fotoleitfähige Verbindung einzusetzenden seitenständige Carbazol-Gruppen tragenden Polysiloxanen hergestellt. Wie vorstehend bereits erwähnt, wird bei Verwendung von viskosen oder hochviskosen Polysiloxanen der in Rede stehenden Art die daraus erzeugte Schicht bzw. Lage nach ihrer Herstellung durch Vernetzung und Härtung verfestigt. Für die Herstellung der erfindungsgemäßen festen, fotoleitfähigen Schichten werden insbesondere niedrigsiedende, leicht verdampfbare Lösungsmittel, wie z.B. Tetrahydrofuran, eingesetzt.

Die erfindungsgemäßen festen, fotoleitfähigen Schichten besitzen nicht nur eine ausgezeichnete Fotoleitfähigkeit, die mit der von entsprechenden fotoleitfähigen Schichten aus Poly-N-Vinylcarbazol vergleichbar ist, sondern sie zeichnen sich darüber hinaus durch ihre gute Haftung gegenüber metallischen Oberflächen sowie ihre guten mechanischen Eigenschaften, insbesondere ihre Flexibilität aus. Sie eignen sich daher hervorragend für den Einsatz in elektrofotographischen Aufzeichnungsmaterialien, wie z.B. Kopierfolien, das sind elektrofotographische Folien für den Kopiersektor, oder elektrofotographischen Druckplatten, insbesondere elektrofotographischen Offsetdruckplatten.

In den elektrofotographischen Aufzeichnungsmaterialien sind die erfindungsgemäßen festen, fotoleitfähigen Schichten auf einen elektrisch leitenden Träger aufgebracht. Als elektrisch leitende Träger für die elektrofotographischen Aufzeichnungsmaterialien sind prinzipiell alle elektrisch leitfähigen Trägermaterialien verwendbar, wie sie für elektrofotographische Aufzeichnungsmaterialien an sich bekannt und üblich sind. Bevorzugt sind je nach Einsatzgebiet der erfindungsgemäßen elektrofotographischen A
Zinn, Blei,
Wismuth oder ähnlichen Metallen gedampfte Kunststoff-Folien, vorzugsweise Polyesterfolien, z.B. aus Polyethylenterephthalat oder Polybutylenterephthalat. Als Träger für die erfindungsgemäßen festen, fotoleitfähigen Schichten kommen auch elektrisch leitende Spezialpapiere in Betracht. Neben den flachen ebenen Trägern, wie Platten, Blechen, Folien, Filmen und dergleichen kommen auch zylinderförmige Träger, beispielsweise Metallzylinder oder Zylinder mit metallischer Oberfläche, in Betracht. Die erfindungsgemäße feste, fotoleitfähige Schicht wird für die Herstellung der elektrofotographischen Aufzeichnungsmaterialien in an sich bekannter und üblicher Weise auf den elektrisch leitenden Träger aufgebracht. Vorzugsweise geschieht dies gleichzeitig mit der Herstellung der erfindungsgemäßen festen, fotoleitfähigen Schicht, beispielsweise dadurch, daß die erfindungsgemäße feste, fotoleitfähige Schicht aus Lösung auf den elektrisch leitenden Träger erzeugt und hergestellt wird.

Die erfindungsgemäßen elektrofotographischen Aufzeichnungsmaterialien können dabei wie für solche Aufzeichnungsmaterialien an für sich bekannt und üblich, zwischen dem elektrisch leitenden Träger und der festen, fotoleitfähigen Schicht bzw. bei Aufzeichnungsmaterialien mit einer mehrlagigen fotoleitfähigen Schicht auch zwischen den einzelnen Lagen der fotoleitfähigen Schicht Sperrschichten beispielsweise aus Metalloxiden, wie Aluminiumoxid, Polymeren, wie z.B. Polyamid, Polyvinylalkohol, Polyacrylat, Polystyrol, oder ähnlichen Systemen enthalten.

Die Erfindung wird durch die nachfolgenden Beispiele näher erläutert. Die in den Beispielen genannten Teile und Prozente beziehen sich, sofern nicht anders angegeben, auf das Gewicht. Volumenteile verhalten sich zu Teilen wie Liter zu kg. Alle in den Beispielen beschriebenen Reaktionen zur Herstellung der Carbazol-substituierten Polysiloxane wurden in einer Stickstoffatmosphäre durchgeführt.

Beispiel 1

Herstellung von Poly[methyl-(3-(9′-carbazoyl)propyl)-siloxan]

3,6 Teile Poly-(methyl-hydrogensiloxan) und 13,68 Teile 9-Allylcarbazol wurden in 150 Volumenteilen trockenem Toluol gelöst. Nach Zugabe einer katalytischen Menge von Hexachloroplatinsäure (10%ig in Isopropanol) wurde die Lösung unter Rühren 20 Stunden auf 80°C erhitzt. Zur Aufarbeitung wurde das Reaktionsgemisch filtriert und das Polymere in 1500 Volumenteile eiskaltem Hexan ausgefällt. Nach zweimaligem Umfällen wurden 13,83 Teile des carbazolsubstituierten Polysiloxans, entsprechend einer 86%igen Ausbeute der Theorie, erhalten. Das erhaltene Polymer, welches eine Glasübergangstemperatur von 48°C besaß, wurde durch IR-, NMR-Spektroskopie, Gelpermeationschromatographie und Elementaranalyse identifiziert. Die Werte der Elementaranalyse sind nachstehend angegeben.

| Elementaranalyse: | | C | H | N |
|---|---|---|---|---|
| $(C_{16}H_{17}NOSi)_n$ | ber.: | 71.87 | 6.41 | 5.24 |
| $(267.38)_n$ | gef.: | 71.50 | 6.70 | 5.04 |

Beispiel 2

Herstellung von Poly-[methyl-(6-(9'-carbazoyl)hexyl)-siloxan]

3,6 Teile Poly-(methyl-hydrogensiloxan) und 16,46 Teile 9-(5'-Hexenyl-carbazol) wurden in 150 Volumenteilen trockenem Toluol gelöst und wie in Beispiel 1 beschrieben zur Reaktion gebracht. Zur Aufarbeitung wurde das Reaktionsgemisch filtriert, das Lösungsmittel abgezogen und das zurückbleibende bei Raumtemperatur hochviskose Polymer mehrmals mit Hexan gewaschen.

Ausbeute: 17,35 g, entsprechend 94 % der Theorie. Das so erhaltene Carbazol-Gruppen enthaltende Polysiloxan, welches eine Glasübergangstemperatur von 8 °C aufwies, wurde in der gleichen Weise wie das Produkt von Beispiel 1 analysiert und charakterisiert.

| Elementaranalyse: | | C | H | N |
|---|---|---|---|---|
| $(C_{19}H_{23}NOSi)_n$ | ber.: | 73.74 | 7.49 | 4.53 |
| $(309.47)_n$ | gef.: | 73.04 | 7.44 | 4.81 |

Beispiel 3

Herstellung von Poly-[methyl-(11-(9'-carbazoyl)undecyl)-siloxan]

3,6 Teile Poly-(methyl-hydrogensiloxan) und 21,09 Teile 9-(10'-Undecenylcarbazol) wurden in der in Beispiel 1 beschriebenen Methode in 150 ml trockenem Toluol miteinander umgesetzt. Zur Aufarbeitung wurde das Reaktionsgemisch filtriert, das Lösungsmittel abgezogen und das erhaltene, bei Raumtemperatur ölige Polymer mehrmals mit Hexan gewaschen.

Ausbeute: 22,17 Teile, entsprechend 97 % der Theorie.

Das erhaltene Carbazol-Gruppen enthaltende Polysiloxan, welches eine Glasübergangstemperatur von -23°C aufwies, wurde wie in Beispiel 1 angegeben analysiert und charakterisiert.

| Elementaranalyse: | | C | H | N |
|---|---|---|---|---|
| $(C_{24}H_{33}NOSi)_n$ | ber.: | 75.94 | 8.76 | 3.69 |
| $(379.60)_n$ | gef.: | 74.50 | 8.76 | 3.74 |

Beispiel 4

Herstellung von Poly-[methyl-(5-(9'-Carbazoyl)pentyl)-siloxan]

3,6 Teile Poly-(methyl-hydrogensiloxan) und 16,95 Teile 9-(4'-Pentenylcarbazol) wurden in 150 Volumenteilen trockenem Toluol gelöst und wie in Beispiel 1 zur Reaktion gebracht und das Reaktionsgemisch aufgearbeitet. Es wurden 16,48 g, entsprechend 93 % der Theorie, des Carbazol-Gruppen enthaltenden Polymeren erhalten, welches nach den in Beispiel 1 genannten Methoden analysiert und charakterisiert wurde und eine Glasübergangstemperatur von 15°C aufwies.

| Elementaranalysen: | | C | H | N |
|---|---|---|---|---|
| $(C_{18}H_{21}NO\ Si)_n$ | ber.: | 73.2 | 7.2 | 4.7 |
| $(295,42)_n$ | gef.: | 72.4 | 7.2 | 4.5 |

Beispiele 5 und 6

Herstellung von haftfesten, flexiblen Schichten

Mit den gemäß Beispiel 1 und 4 hergestellten Carbazol-Gruppen enthaltenden Polysiloxanen wurde jeweils eine 25%ige Lösung in Tetrahydrofuran hergestellt. Diese Lösungen wurden jeweils in 65 µm dicken Schichten auf die Aluminiumoberfläche von aluminisierten Polyethylenterephthalat-Folien gegossen und die Schichten dann 15 Minuten bei 80°C getrocknet, wonach eine Trockenschichtdicke von 9 µm resultierte. Die so erhaltenen festen Schichten aus den carbazolsubstituierten Polysiloxanen hafteten einwandfrei auf der Aluminiumoberfläche und zeigten eine ausgezeichnete Flexibilität. Die Schicht aus dem Polysiloxan gemäß Beispiel 4 blieb sogar an scharfen Knickstellen unbeschädigt.

Zum Vergleich wurde aus einer 10%igen Lösung von Poly-N-vinylcarbazol in Tetrahydrofuran ebenfalls auf die Aluminiumoberfläche einer aluminisierten Polyethylenterephthalat-Folie eine Schicht so gegossen, daß sie nach dem Trocknen (15 Minuten bei 80°C) eine Trockenschichtdicke von 8 bis 9 µm hatte. Die Poly-N-vinylcarbazol-Schicht war sehr spröde und zersprang schon bei leichtem Biegen der Polyethylenterephthalat-Folie in unzählige kleine Stücke. Die Poly-N-vinylcarbazol-Schicht wies praktisch keine Haftung gegenüber der Aluminiumoberfläche auf.

Beispiel 7

Messung der Photoleitfähigkeit

Mit dem gemäß Beispiel 1 hergestellten Carbazol-Gruppen enthaltenden Polysiloxan wurde, wie in den Beispielen 5 und 6 beschrieben, eine Schicht hergestellt, die neben dem carbazolsubstituierten Polysiloxan noch 5 Mol.-%, bezogen auf die gesamte Schicht, an Trinitrofluorenon -im Komplex mit den Carbazol-Gruppen des Polysiloxans -enthielt. Diese Schicht wurde über einen Koronadraht mit einer Oberflächenspannung von +8,5 kV beladen und dann mit einer 150 Watt-Xenon-Hochdrucklampe unter Zwischenschalten eines Interferenz-Filters für die Wellenlänge 366 nm 2 Minuten lang belichtet. Nach der 2-minütigen Belichtung waren 97,7 % der Oberflächenspannung abgeflossen; der Halbwerts-Photoabfall betrug 743 ms. Die Photoleitung entspricht der von Poly-N-vinylcarbazol.

Beispiel 8

Es wurde wie in Beispiel 7 gearbeitet, diesmal jedoch eine photoleitfähige Schicht aus dem gemäß Beispiel 4 hergestellten Carbazol-Gruppen enthaltenden Polysiloxan hergestellt, dessen Carbazol-Gruppen mit 5 Mol.-%, bezogen auf die gesamte Schicht, Trinitrofluorenon dotiert waren. Nach 3-minütiger Belichtung der mit 8,5 kV aufgeladenen Schicht waren 88 % der Oberflächenspannung abgeflossen. Der Halbwertsphotoabfall betrug diesmal 954 ms.

Beispiel 9

Herstellung von Poly-(methyl-11-(9′-carbazoyl)undecyl-siloxan-co-poly-(methyl-hydrogensiloxan)

3,6 Teile Poly-(methyl-hydrogensiloxan) und 17,2 Teile 9-(10′-undecenylcarbazol) wurden in 150 Volumenteilen trockenem Toluol gelöst und, wie in Beispiel 1 beschrieben, zur Reaktion gebracht.

Das Reaktionsgemisch wurde ohne vorherige Aufarbeitung zu einem vernetzten Film verarbeitet. Hierzu wurden dem Reaktionsgemisch 0,9 Teile 1,21-Docosadien zugesetzt. Aus dieser Lösung wurden Filme gegossen und anschließend bei 120°C vernetzt.

Beispiel 10

Mit dem gemäß Beispiel 1 hergestellten Carbazol-Gruppen enthaltenden Polysiloxan wurde eine 25%ige Lösung in Tetrahydrofuran hergestellt. Ein Teil dieser Lösung wurde unmittelbar auf die Aluminiumoberfläche einer aluminisierten Polyethylenterephthalat-Folie in solcher Dicke gegossen, daß nach dem Trocknen (15 Min. bei 80°C) eine Trockenschichtdicke von 10 µm resultierte. Zu dem anderen Teil der Lösung wurden 0,6 %, bezogen auf das Polysiloxan, Rhodamin B zugegeben. Mit der so sensibilisierten Lösung wurde ebenfalls eine Schicht einer Trockenschichtdicke von 10 µm auf die Aluminiumoberfläche einer aluminisierten Polyethylenterephthalat-Folie aufgebracht. Die erhaltenen festen Schichten aus den Carbazol-substituierten Polysiloxanen hafteten einwandfrei auf der Aluminiumoberfläche und zeichnet eine ausgezeichnete Flexibilität.

Die aus den Carbazol-substituierten Polysiloxanen hergestellten Schichten wurden über einen Koronadraht mit einer Oberflächenspannung von -8,5 kV beladen und dann mit einer 150 Watt Xenon-Hochdrucklampe 2 Minuten lang belichtet. Der Fotoabfall durch die Belichtung, und damit auch die Fotoleitfähigkeit lagen in der mit Rhodamin B sensibilisierten Schicht deutlich höher als in der unsensibilisierten Schicht. Der Halbwert-Fotoabfall, d.h. die Zeit, in der die aufgebrachte Oberflächenladung durch die Belichtung auf die Hälfte abgesunken war, lag in der Größenordnung von etwa 1000 Millisekunden.

Beispiel 11

Eine 25%ige Tetrahydrofuran-Lösung des gemäß Beispiel 1 hergestellten Carbazol-Gruppen enthaltenden Polysiloxans wurden mit 7,5 %, bezogen auf das Polysiloxan, an N,N′-bis-cyclohexylethyl-perylen-3,4:9, 10-tetracarbonsäurediimid versetzt. Eine aus dieser Lösung auf eine aluminisierte Polyethylenterephthalatfolie gegossene fotoleitfähige Schicht mit einer Trockenschichtdicke von 10 µm wurde über einen Koronadraht mit einer Oberflächenspannung von +8,5 kV beladen und dann mit einer 150 Watt Xenon-Hochdrucklampe unter Zwischenschaltung eines Graufilters mit der optischen Dichte 1 für eine Sekunde belichtet. Nach der Belichtung waren 68 % der Oberflächenspannung abgeflossen; der Halbwert-Fotoabfall betrug 584 Millisekunden.

Vergleichsbeispiel A

Es wurde wie in Beispiel 11 gearbeitet, diesmal jedoch anstelle des Carbazol-Gruppen enthaltenden Polysiloxans zur Herstellung der fotoleitfähigen Schicht ein Poly-N-Vinylcarbazol verwendet. Zur Herstellung der Lösung diente diesmal ein Gemisch aus Tetrahydrofuran und Toluol (6:4). Die hieraus hergestellte fotoleitfähige Schicht zeigte eine vergleichbare Fotoleitfähigkeit wie die Schicht von Beispiel 11, war jedoch

im Gegensatz zu dieser sehr spröde und zersprang schon bei leichtem Biegen der Polyethylenterephthalat-Folie in unzählige kleine Stücke. Die Poly-N-Vinylcarbazol-Schicht wies praktisch keine Haftung gegenüber der Aluminiumoberfläche der aluminisierten Polyethylenterephthalat-Folie auf.

Beispiel 12

Mit dem gemäß Beispiel 4 hergestellten Carbazol-Gruppen tragenden Polysiloxan wurde eine 25%ige Tetrahydrofuran-Lösung hergestellt und diese mit 5 %, bezogen auf das Polysiloxan, an 1,6,7,12-Tetrachlorperylen-3,4:9,10-tetracarbonsäurediimid-bis-(n-butyl)benzimidazol versetzt. Aus dieser Lösung wurde auf einem Aluminiumträger eine fotoleitfähige Schicht einer Trockenschichtdicke von 10 µm gegossen. Diese fotoleitfähige Schicht wurde in wie in Beispiel 11 beschrieben, aufgeladen und belichtet. Nach der Belichtung waren 75 % der Oberflächenspannung abgeflossen: der Halbwert-Fotoabfall betrug dieses Mal 390 Millisekunden.

Beispiel 13

Eine Mischung aus 40 Teilen Tetrachlorperylen-3,4:9,10-tetracarbonsäuredi imid-bis-benzimidazol und 60 Teilen eines Vinylchlorid/Maleinsäureisopropylester/Acrylsäure-Copolymerisats (74:24:2), gelöst in einer Mischung aus Tetrahydrofuran und Toluol (3:1) wurde so auf eine aluminisierte Polyethylenterephthalat-Folie aufgebracht, daß nach dem Trocknen eine Trockenschichtdicke von etwa 1 µm resultierte. Darüber wurde eine 25%ige Tetrahydrofuran-Lösung des gemäß Beispiel 1 hergestellten Carbazol-Gruppen tragenden Polysiloxans gegossen und das Tetrahydrofuran durch Trocknen entfernt. Die Trockenschichtdicke der resultierenden Polysiloxan-Schicht betrug 10 µm. Es wurde eine flexible Fotoleiterfolie mit guter Haftung auf dem Träger erhalten. Die Fotoleiterschicht wurde über einen Koronadraht mit einer Oberflächenspannung von -8,5 kV aufgeladen und anschließend mit einer 150 Watt Xenon-Hochdrucklampe unter Verwendung eines Graufilters mit der optischen Dichte 1 eine Sekunde lang belichtet. Der Fotoabfall durch die Belichtung betrug 81 %, die Halbwertszeit 238 Millisekunden.

Sehr gute Ergebnisse wurden auch erhalten, wenn für die Herstellung der ersten Lage der Fotoleiterschicht eine Mischung aus dem Tetrachlorperylen-3,4:9,10-tetracarbonsäure-diimid-bis-benzimidazol und N,N'-bis(phenylethyl)-perylen-3,4:9,10-tetracarbonsäurediimid (2:1) als sensibilisierend wirkende Verbindung eingesetzt wurde.

Vergleichsversuch B

Es wurde wie in Beispiel 13 beschrieben gearbeitet, diesmal jedoch anstelle der Polysiloxan-Schicht die obere Lage aus Poly-N-Vinylcarbazol hergestellt. Die Poly-N-Vinylcarbazol-Schicht besaß ebenfalls eine Trockenschichtdicke von 10 µm. Das so erhaltene elektrofotographische Aufzeichnungsmaterial war in seinen Fotoleiter-Eigenschaften mit dem des Beispiels 13 vergleichbar, die Fotoleiter-Schicht war jedoch spröde und nicht flexibel und zersprang beim Biegen der Polyethylenterephthalat-Folie in viele kleine Stücke.

Beispiel 14

Auf eine aluminisierte Polyethylenterephthalat-Folie wurde zunächst, wie in Beispiel 13 beschrieben, eine 1 µm-starke Schicht aus einer Mischung von N,N'-bis-(phenylethyl)-perylen-3,4:9,10-tetracarbonsäurediimid und einem Vinylchlorid/Maleinsäurehalbester/Acrylsäure-Copolymerisat hergestellt. Auf diese erste Lage aus der sensibilisierend wirkenden Verbindung wurde anschließend mit der gemäß Beispiel 3 hergestellten Lösung eine 10 µm-starke, feste Schicht aus den Carbazol-Gruppen tragenden Polysiloxanen hergestellt. Hierzu wurde dem Reaktionsgemisch des Beispiels 3 0,9 Teile 1,21-Docosadien zugesetzt und der aus dieser Lösung auf die erste Lage gegossene Film nach Abdampfen des Lösungsmittels bei 120°C vernetzt. Die Fotoleiter-Eigenschaften des so hergestellten elektrofotographischen Aufzeichnungsmaterials waren mit denen des Beispiels 13 vergleichbar.

Beispiel 15

Verwendung als Kopierfolie

Das gemäß Beispiel 13 hergestellte elektrofotographische Aufzeichnungsmaterial wurde als Kopierfolie eingesetzt und dabei einem Cyclentest unterworfen. Dazu wurde die Folie innerhalb von 1,5 Stunden 100 mal negativ beladen und belichtet. Die Akzeptanz, die maximale Beladbarkeit, die Dunkelleitfähigkeit, der Fotoabfall und das Restpotential blieben dabei unverändert.

## Ansprüche

1. Polysiloxane, dadurch gekennzeichnet, daß sie seitenständig zur Polymerhauptkette gebundene Carbazol-Gruppen eingebaut enthalten.

2. Polysiloxane nach Anspruch 1, dadurch gekennzeichnet, daß sie wiederkehrende Siloxan-Einheiten der allgemeinen Formel (I)

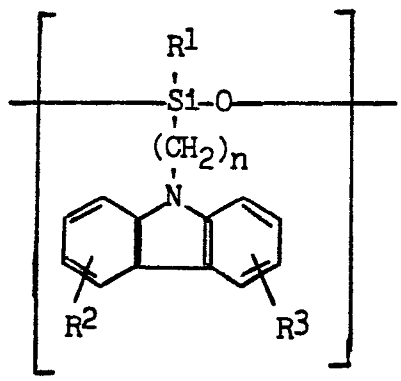

(I)

eingebaut enthalten, worin
$R^1$ eine Alkylgruppe,
$R^2$,$R^3$ unabhängig voneinander, ein Wasserstoffatom, eine Alkylgruppe, eine Alkoxy-Gruppe, eine Amino-Gruppe, eine Hydroxygruppe oder ein Halogenatom und
n eine ganze Zahl gleich oder größer 2
bedeuten.

3. Polysiloxane nach Anspruch 2, dadurch gekennzeichnet, daß in den wiederkehrenden Siloxan-Einheiten der allgemeinen Formel (I) der Rest $R^1$ eine Methylgruppe ist.

4. Polysiloxane nach einem der Ansprüche 2 oder 3, dadurch gekennzeichnet, daß in den wiederkehrenden Siloxan-Einheiten der allgemeinen Formel (I) jeder der Reste $R^2$ und $R^3$ ein Wasserstoffatom darstellt.

5. Polysiloxane nach einem der Ansprüche 2 bis 4, dadurch gekennzeichnet, daß in den wiederkehrenden Siloxan-Einheiten der allgemeinen Formel (I) n eine ganze Zahl im Bereich von 2 bis 22 ist.

6. Polysiloxane nach einem der Ansprüche 2 bis 5, dadurch gekennzeichnet, daß sie im wesentlichen aus wiederkehrenden Siloxan-Einheiten der allgemeinen Formel (I) aufgebaut sind.

7. Polysiloxane nach einem der Ansprüche 2 bis 6, dadurch gekennzeichnet, daß sie bei Raumtemperatur fest sind und neben den Endgruppen praktisch ausschließlich aus wiederkehrenden Siloxan-Einheiten der allgemeinen Formel (I) bestehen, worin n eine ganze Zahl nicht über 5 darstellt.

8. Polysiloxane nach einem der Ansprüche 2 bis 6, dadurch gekennzeichnet, daß sie zusätzlich zu den wiederkehrenden Siloxan-Einheiten der allgemeinen Formel (I) noch wiederkehrende Siloxan-Einheiten der allgemeinen Formel (II)

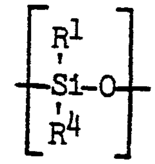

(II)

eingebaut enthalten, worin
$R^1$ eine Alkylgruppe und
$R^4$ einen reaktiven, vernetzbaren Rest
bedeuten.

9. Polysiloxane nach Anspruch 8, dadurch gekennzeichnet, daß in der allgemeinen Formel (II) der Rest $R^1$ eine Methylgruppe ist.

10. Polysiloxane nach einem der Ansprüche 8 oder 9, dadurch gekennzeichnet, daß in den wiederkehrenden Siloxan-Einheiten der allgemeinen Formel (II) der Rest $R^4$ ein Wasserstoffatom ist.

11. Polysiloxane nach einem der Ansprüche 8 oder 9, dadurch gekennzeichnet, daß in den wiederkehrenden Siloxan-Einheiten der allgemeinen Formel (II) $R^4$ einen eine (Meth)acryloyl-Gruppe enthaltenden Rest darstellt.

12. Polysiloxane nach einem der Ansprüche 8 bis 11, dadurch gekennzeichnet, daß die Polysiloxane wiederkehrende Siloxan-Einheiten der allgemeinen Formel (I) und die wiederkehrenden Siloxan-Einheiten der allgemeinen Formel (II) im molaren Verhältnis zueinander von 80 bis 99,5 % zu 20 bis 0,5 % eingebaut enthalten.

13. Polysiloxane nach einem der Ansprüche 8 bis 12, dadurch gekennzeichnet, daß die Polysiloxane bei Raumtemperatur viskose Öle sind.

14. Feste, photoleitfähige Schichten, hergestellt aus seitenständige Carbazol-Gruppen tragenden Polysiloxanen gemäß einem der Ansprüche 1 bis 13.

15. Feste photoleitfähige Schichten gemäß Anspruch 14, dadurch gekennzeichnet, daß sie aus bei Raumtemperatur festen Polysiloxanen gemäß einem der Ansprüche 1 bis 12 hergestellt sind.

16. Feste photoleitfähige Schichten nach Anspruch 14, dadurch gekennzeichnet, daß sie aus bei Raumtemperatur viskosen Polysiloxanen gemäß Anspruch 13 hergestellt sind, die anschließend, gegebenenfalls unter Mitverwendung von Vernetzungsmitteln und/oder Vernetzungsinitiatoren, vernetzt worden sind.

17. Feste photoleitfähige Schichten gemäß Anspruch 14, dadurch gekennzeichnet, daß sie neben den seitenständige Carbazol-Gruppen tragenden Polysiloxanen Elektronenakzeptor-Materialien enthalten, die mit den Carbazol-Gruppen einen Ladungsübertragungskomplex zu bilden vermögen.

18. Verwendung der photoleitfähigen Schichten gemäß einem der Ansprüche 14bis 17 in elektrophotographischen Aufzeichnungsmaterialien.

19. Verwendung der photoleitfähigen Schichten gemäß Anspruch 15 zur Herstellung von elektrophotographischen Offset-Druckplatten.

20. Feste, fotoleitfähige Schicht mit einer organischen, fotoleitfähigen Verbindung und einer für diese sensibilisierend wirkenden, fotoempfindlichen Verbindung, dadurch gekennzeichnet, daß sie als fotoleitfähige Verbindung ein seitenständige Carbazol-Gruppen tragendes Polysiloxan gemäß einem der Ansprüche 1 bis 13 und als sensibilisierend wirkende Verbindung einen organischen Farbstoff oder ein organisches Pigment enthält.

21. Feste, fotoleitfähige Schicht nach Anspruch 20, dadurch gekennzeichnet, daß in den wiederkehrenden Siloxan-Einheiten der allgemeinen Formel (I) des als fotoleitende Verbindung eingesetzten Polysiloxans n eine Zahl im Bereich von 3 bis 11 ist.

22. Feste, fotoleitfähige Schicht nach einem der Ansprüche 20 oder 21, dadurch gekennzeichnet, daß sie aus einem bei Raumtemperatur festen Polysiloxan mit seitenständig gebundenen Carbazol-Gruppen aufgebaut ist.

23. Feste, fotoleitfähige Schicht nach einem der Ansprüche 20 oder 21, dadurch gekennzeichnet, daß zu ihrer Herstellung ein bei Raumtemperatur viskoses oder hochviskoses Polysiloxan eingesetzt worden ist, welches neben den seitenständigen, die Carbazol-Gruppen enthaltenden Resten, reaktive, vernetzbare Reste enthält, die anschließend, gegebenenfalls unter Mitverwendung von Vernetzungsmitteln und/oder Vernetzungsinitiatoren, unter Verfestigung der Schicht vernetzt worden sind.

24. Feste, fotoleitfähige Schicht nach einem der Ansprüche 20 + 23, dadurch gekennzeichnet, daß sie als sensibilisierend wirkende Verbindung ein Perylen-3,4:9,10-tetracarbonsäurederivat enthält.

25. Feste, fotoleitfähige Schicht nach Anspruch 24, dadurch gekennzeichnet, daß sie als sensibilisierend wirkende Verbindung ein Perylen-3,4:9,10-tetracarbonsäurediimidderivat enthält.

26. Feste, fotoleitfähige Schicht nach einem der Ansprüche 20 bis 25, dadurch gekennzeichnet, daß es sich bei der fotoleitfähigen Schicht um eine einlagige, homogen sensibilisierte fotoleitfähige Schicht handelt.

27. Feste, fotoleitfähige Schicht nach einem der Ansprüche 20 bis 25, dadurch gekennzeichnet, daß es sich bei der fotoleitfähigen Schicht um eine mehrlagige, heterogen sensibilisierte fotoleitfähige Schicht handelt.

28. Elektrofotographisches Aufzeichnungsmaterial mit einem elektrisch leitenden Träger und einer auf diesem aufgebrachten festen, fotoleitfähigen Schicht, dadurch gekennzeichnet, daß es eine fotoleitfähige Schicht nach einem der Ansprüche 20 bis 25 enthält.

Patentansprüche für den folgenden Vertragsstaat ; ES

1. Verfahren zur Herstellung fester, fotoleitfähiger Schichten, dadurch gekennzeichnet, daß sie aus Polysiloxanen, die wiederkehrende Siloxan-Einheiten der allgemeinen Formel (I)

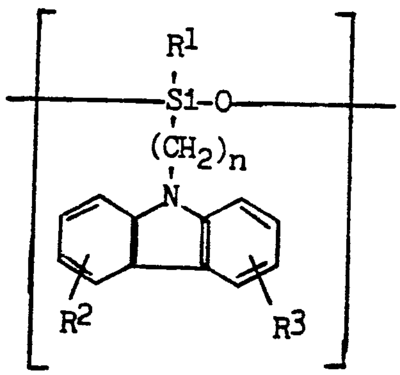

(I)

eingebaut enthalten, worin
$R^1$ eine Alkylgruppe,
$R^2$,$R^3$ unabhängig voneinander, ein Wasserstoffatom, eine Alkylgruppe, eine Alkoxy-Gruppe, eine Amino-Gruppe, eine Hydroxygruppe oder ein Halogenatom und
n eine ganze Zahl gleich oder größer 2
bedeuten, hergestellt werden.

2. Verfahren nach Anspruch 1, dadurch gekennzeichnet, daß in den wiederkehrenden Siloxan-Einheiten der allgemeinen Formel (I) der Rest $R^1$ eine Methylgruppe ist.

3. Verfahren nach einem der Ansprüche 1 oder 2, dadurch gekennzeichnet, daß in den wiederkehrenden Siloxan-Einheiten der allgemeinen Formel (I) jeder der Reste $R^2$ und $R^3$ ein Wasserstoffatom darstellt.

4. Verfahren nach einem der Ansprüche 1 bis 3, dadurch gekennzeichnet, daß in den wiederkehrenden Siloxan-Einheiten der allgemeinen Formel (I) n eine ganze Zahl im Bereich von 2 bis 22 ist.

5. Verfahren nach einem der Ansprüche 1 bis 4, dadurch gekennzeichnet, daß die Polysiloxane im wesentlichen aus wiederkehrenden Siloxan-Einheiten der allgemeinen Formel (I) aufgebaut sind.

6. Verfahren nach einem der Ansprüche 1 bis 5, dadurch gekennzeichnet, daß die Polysiloxane bei Raumtemperatur fest sind und neben den Endgruppen praktisch ausschließlich aus wiederkehrenden Siloxan-Einheiten der allgemeinen Formel (I) bestehen, worin n eine ganze Zahl nicht über 5 darstellt.

7. Verfahren nach einem der Ansprüche 1 bis 5, dadurch gekennzeichnet, daß die Polysiloxane zusätzlich zu den wiederkehrenden Siloxan-Einheiten der allgemeinen Formel (I) noch wiederkehrende Siloxan-Einheiten der allgemeinen Formel (II)

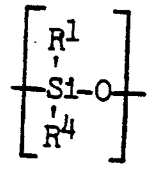

(II)

eingebaut enthalten, worin

$R^1$ eine Alkylgruppe und
$R^4$ einen reaktiven, vernetzbaren Rest
bedeuten.

8. Verfahren nach Anspruch 7, dadurch gekennzeichnet, daß in der allgemeinen Formel (II) der Rest $R^1$ eine Methylgruppe ist.

9. Verfahren nach einem der Ansprüche 7 oder 8, dadurch gekennzeichnet, daß in den wiederkehrenden Siloxan-Einheiten der allgemeinen Formel (II) der Rest $R^4$ ein Wasserstoffatom ist.

10. Verfahren nach einem der Ansprüche 7 oder 8, dadurch gekennzeichnet, daß in den wiederkehrenden Siloxan-Einheiten der allgemeinen Formel (II) $R^4$ einen eine (Meth)acryloyl-Gruppe enthaltenden Rest darstellt.

11. Verfahren nach einem der Ansprüche 7 bis 10, dadurch gekennzeichnet, daß die Polysiloxane wiederkehrende Siloxan-Einheiten der allgemeinen Formel (I) und die wiederkehrenden Siloxan-Einheiten der allgemeinen Formel (II) im molaren Verhältnis zueinander von 80 bis 99,5 % zu 20 bis 0,5 % eingebaut enthalten.

12. Verfahren nach einem der Ansprüche 8 bis 12, dadurch gekennzeichnet, daß die Polysiloxane bei Raumtemperatur viskose Öle sind.

13. Verfahren gemäß Anspruch 1 bis 11, dadurch gekennzeichnet, daß sie aus bei Raumtemperatur festen Polysiloxanen gemäß einem der Ansprüche 1 bis 12 hergestellt sind.

14. Verfahren nach Anspruch 12, dadurch gekennzeichnet, daß sie aus bei Raumtemperatur viskosen Polysiloxanen gemäß Anspruch 13 hergestellt sind, die anschließend, gegebenenfalls unter Mitverwendung von Vernetzungsmitteln und/oder Vernetzungsinitiatoren, vernetzt worden sind.

15. Verfahren gemäß Anspruch 12, dadurch gekennzeichnet, daß sie neben den seitenständige Carbazol-Gruppen tragenden Polysiloxanen Elektronenakzeptor-Materialien enthalten, die mit den Carbazol-Gruppen einen Ladungsübertragungskomplex zu bilden vermögen.

16. Verfahren zur Herstellung von elektrophotographischen Aufzeichnungsmaterialien unter Verwendung der photoleitfähigen Schichten gemäß einem der Ansprüche 12 bis 15.

17. Verfahren zur Herstellung von elektrophotographischen Offset-Druckplatten unter Verwendung der photoleitfähigen Schichten gemäß Anspruch 13.

18. Verfahren zur Herstellung einer festen, fotoleitfähige Schicht mit einer organischen, fotoleitfähigen Verbindung und einer für diese sensibilisierend wirkenden, fotoempfindlichen Verbindung, dadurch gekennzeichnet, daß sie als fotoleitfähige Verbindung ein seitenständige Carbazol-Gruppen tragendes Polysiloxan und sensibilisierend wirkende Verbindung ein organischer Farbstoff oder ein organisches Pigment eingesetzt wird.

19. Verfahren nach Anspruch 18, dadurch gekennzeichnet, daß in den wiederkehrenden Siloxan-Einheiten der allgemeinen Formel (I) des als fotoleitende Verbindung eingesetzten Polysiloxans n eine Zahl im Bereich von 3 bis 11 ist.

20. Verfahren nach Anspruch 18 oder 19, dadurch gekennzeichnet, daß sie aus einem bei Raumtemperatur festen Polysiloxan mit seitenständig gebundenen Carbazol-Gruppen aufgebaut wird.

21. Verfahren nach Anspruch 18 oder 19, dadurch gekennzeichnet, daß zu ihrer Herstellung ein bei Raumtemperatur viskoses oder hochviskoses Polysiloxan eingesetzt wird. ist, welches neben den seitenständigen, die Carbazol-Gruppen enthaltenden Resten, reaktive, vernetzbare Reste enthält, die anschließend, gegebenenfalls unter Mitverwendung von Vernetzungsmitteln und/oder Vernetzungsinitiatoren, unter Verfestigung der Schicht vernetzt worden sind.

22. Verfahren nach einem der Ansprüche 1 bis 21, dadurch gekennzeichnet, daß als sensibilisierend wirkende Verbindung ein Perylen-3,4:9,10-tetracarbonsäurederivat eingesetzt wird.

23. Verfahren nach Anspruch 22, dadurch gekennzeichnet, daß als sensibilisierend wirkende Verbindung ein Perylen-3,4:9,10-tetracarbonsäurediimidderivat eingesetzt wird.

24. Verfahren nach einem der Ansprüche 18 bis 23, dadurch gekennzeichnet, daß als fotoleitfähige Schicht eine einlagige, homogen sensibilisierte fotoleitfähige Schicht eingesetzt wird.

25. Verfahren nach einem der Ansprüche 18 bis 23, dadurch gekennzeichnet, daß als fotoleitfähige Schicht eine mehrlagige, heterogen sensibilisierte fotoleitfähige Schicht eingesetzt wird.

26. Verfahren zur Herstellung von elektrofotographischem Aufzeichnungsmaterial mit einem elektrisch leitenden Träger und einer auf diesem aufgebrachten festen, fotoleitfähigen Schicht, dadurch gekennzeichnet, daß eine nach einem Verfahren gemäß einem der Ansprüche 18 bis 23 hergestellte fotoleitfähige Schicht eingesetzt wird.